# EUROPEAN PATENT APPLICATION

(11) **EP 3 270 024 A1**
(43) Date of publication of application: **17.01.2018**
(21) Application number: 17180800.9
(22) Date of filing: 11.07.2017
(51) Int. Cl.: F16K 39/02, F16K 1/22, F16K 1/226, F16K 31/05

(54) **STARTER AIR VALVE WITH MULTIPLE DISC VALVES**

(30) Priority: 11.07.2016 US 201615206609
(71) Applicant: Hamilton Sundstrand Corporation, Windsor Locks, CT 06096-1010 (US)
(72) Inventor: KELLY, Myles R., Willimantic, Connecticut 06226 (US); ELDER, James S., South Windsor, Connecticut 06074 (US)
(74) Representative: Gittins, Alex Michael

(57) **Abstract**

A disc assembly (110) for use in an air valve (100) with a valve body (104) including an outer disc (120) with a concentric opening (125) therethrough and an outer seal area (119), the outer seal area (119) to selectively seal against the valve body (104), and an inner disc (130) disposed in the concentric opening (125) of the outer disc (120), the inner disc (130) to selectively seal against the outer disc (120).

## Description

### BACKGROUND

The subject matter disclosed herein relates to air valves, and more particularly, to starter air valves for aircraft engines.

After engine operation and shut down, the aircraft engine may experience a bowed rotor condition which requires the aircraft engine to be cooled by drawing fan air through the aircraft engine by motoring the aircraft engine at a sub-idle speed. Starter air valves are used within aircraft to selectively provide airflow to the air turbine starter of aircraft engine to rotate the aircraft engine at a desired speed. However, if the starter air valve fails to open, the manual override cannot provide a controlled amount of airflow to maintain the desired sub-idle speed to adequately cool the aircraft engine while avoiding damage from higher speed operation.

### BRIEF SUMMARY

According to an embodiment, a disc assembly for use in an air valve with a valve body includes an outer disc with a concentric opening therethrough and an outer seal area, the outer seal area to selectively seal against the valve body, and an inner disc disposed in the concentric opening of the outer disc, the inner disc to selectively seal against the outer disc.

According to an embodiment, an air valve includes a valve body, and a disc assembly, including an outer disc with a concentric opening therethrough and an outer seal area, the outer seal area to selectively seal against the valve body, and an inner disc disposed in the concentric opening of the outer disc, the inner disc to selectively seal against the outer disc.

Technical function of the embodiments described above includes an inner disc disposed in the concentric opening of the outer disc, the inner disc to selectively seal against the outer disc.

Other aspects, features, and techniques of the embodiments will become more apparent from the following description taken in conjunction with the drawings.

### BRIEF DESCRIPTION OF THE DRAWINGS

The subject matter is particularly pointed out and distinctly claimed in the claims at the conclusion of the specification. The foregoing and other features, and advantages of the embodiments are apparent from the following detailed description taken in conjunction with the accompanying drawings in which like elements are numbered alike in the FIGURES:
FIG. 1 is a partial cross sectional view of one embodiment of an air valve;
FIG. 2 is a pictorial view of a butterfly valve assembly of the air valve of FIG. 1;
FIG. 3A is a pictorial view of the outer valve disc of the butterfly valve assembly of FIG. 2;
FIG. 3B is a cross sectional view of the outer valve disc of FIG. 3A along section line B-B;
FIG. 4 is a pictorial view of the inner valve disc of the butterfly assembly of FIG. 2;
FIG. 5 is a pictorial view of the butterfly valve assembly of FIG. 2 with the inner valve disc rotated open; and
FIG. 6 is a pictorial view of the butterfly valve assembly of FIG. 2 with the inner valve disc rotated closed and actuating the outer valve disc.

### DETAILED DESCRIPTION

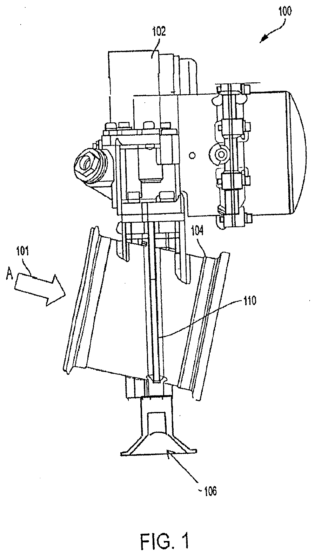

Referring to the drawings, FIG. 1 shows an air valve 100. In the illustrated embodiment, the air valve 100 includes a valve actuator 102, a valve body 104, a manual override interface 106, and a butterfly valve assembly 110. In the illustrated embodiment, the air valve 100 can selectively provide airflow 101 to an air turbine starter of an aircraft engine. In the illustrated embodiment, the manual override interface 106 can be utilized to provide a desired airflow to the air turbine starter of the aircraft engine to motor the aircraft engine at sub-idle speed to cool the aircraft engine. Advantageously, the air valve 100 allows for an operator to manually provide a desired amount of airflow to cool the engine in response to the bowed rotor condition while avoiding rubbing and other damage from an excessive aircraft engine motoring speed.

In the illustrated embodiment, the airflow 101 flows through the valve body 104. Airflow 101 through the valve body 101 is controlled by the butterfly valve assembly 110 disposed therein.

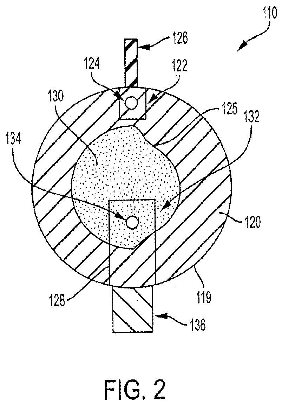

Referring to FIG. 2, the butterfly valve assembly 110 includes an outer valve disc 120 and an inner valve disc 130. In the illustrated embodiment, the butterfly valve assembly utilizes multiple valve discs sized for a desired flow area needed to achieve a desired flow rate. In the illustrated embodiment, the inner valve disc 130 is sized to provide a desired sub-idle motoring speed to cool an engine during a bowed rotor condition. In certain embodiments, multiple valve disc sizes can be utilized to achieve the desired range of targeted flow rates and pressures. Advantageously, by utilizing the outer valve disc 120 and the inner valve disc 130, manual operation of the air valve 100 can provide a desired flow rate while avoiding any potential damage.

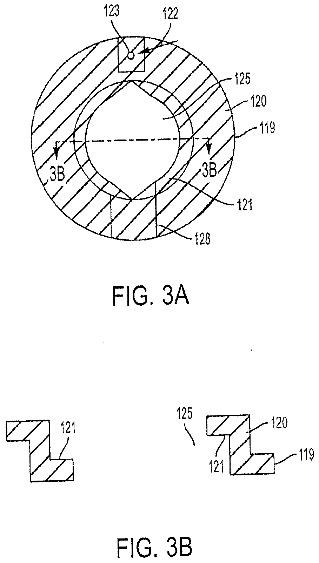

Referring to FIGS. 2, 3A and 3B, the outer valve disc 120 is shown. In the illustrated embodiment, the outer valve disc 120 includes an outer seal area 119, a concentric hole 125, a shaft hole 122, and a through hole 128. In the illustrated embodiment, the outer valve disc 120 can seal the outer seal area 119 against the valve body 104, shown in FIG. 1.

In the illustrated embodiment, the outer valve disc 120 is rotated by an outer disc shaft 126. In the illustrated embodiment, the shaft hole 122 can receive the outer disc shaft 126. Torque can be transferred to the outer valve disc 120 through the pin 124. In the illustrated embodiment, the pin 124 is received in the pin hole 123. In certain embodiments, the outer disc shaft 126 can be affixed in any suitable manner. In certain embodiments, the outer disc shaft 126 is a spring loaded shaft to bias the outer valve disc 120 to a closed position. In the illustrated embodiment, the outer disc shaft 126 is coupled to the valve actuator 102, shown in FIG. 1.

In the illustrated embodiment, the valve actuator 102 can rotate the outer valve disc 120. The valve actuator 102 can be any suitable actuator. During starting operations, the valve actuator 102 can rotate the outer valve disc 120 to provide an airflow sufficient to provide a full start condition for an aircraft engine. During a bowed rotor condition of the aircraft engine, the valve actuator 102 to selectively rotate the outer valve disc 120 to a known position to provide a desired airflow to the air turbine starter of the aircraft engine to motor the aircraft engine at sub-idle speed to cool the aircraft engine.

In the illustrated embodiment, the outer valve disc 120 includes a concentric hole 125 to allow the inner valve disc 130 therethrough. As shown in FIG. 3B, the outer valve disc 120 can include a seal land 121 disposed around the edge of the concentric hole 125. The seal land 121 allows for the inner valve disc 130 to seal against the concentric hole 125 and further transfer torque from the inner valve disc 130 to the outer valve disc 120. In the illustrated embodiment, the outer valve disc 120 further includes a through hole 128 to allow the inner disc shaft 136 to pass through the outer valve disc 120.

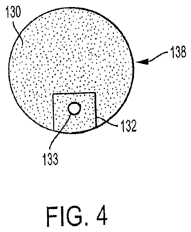

Referring to FIGS. 2 and 4, the inner valve disc 130 is shown. In the illustrated embodiment, the inner valve disc 130 includes a disc seal 138 and a shaft hole 132. In the illustrated embodiment, the inner valve disc 130 can seal the disc seal 138 against the seal land 121. In the illustrated embodiment, the disc seal 138 is any suitable sealing material, including any suitable elastomer.

In the illustrated embodiment, the inner valve disc 130 is rotated by an inner disc shaft 136. In the illustrated embodiment, the shaft hole 132 can receive the inner disc shaft 136. Torque can be transferred to the inner valve disc 130 through the pin 134. In the illustrated embodiment, the pin 134 is received in the pin hole 133. In certain embodiments, the inner disc shaft 136 can be affixed in any suitable manner. In certain embodiments, the inner disc shaft 136 is a spring loaded shaft to bias the inner valve disc 130 to a closed position. In the illustrated embodiment, the inner disc shaft 136 passes through the through hole 128 of the outer disc 120. In the illustrated embodiment, the inner disc shaft 136 is coupled to the manual override interface 106, shown in FIG. 1.

During operation, the valve actuator 102 may fail to actuate the outer valve disc 120. In the illustrated embodiment, the manual override interface 106 allows a technician to manually rotate the inner valve disc 130 and the outer valve disc 120. In the illustrated embodiment, the manual override interface 106 is a manual wrenching feature, allowing a technician to use a tool to manually rotate the inner disc shaft 136, and therefore the inner valve disc 130 and the outer valve disc 120.

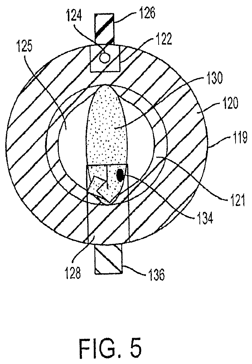

Referring to FIG. 5, the inner valve disc 130 is shown rotated 70 degrees by the manual override interface 106. In the illustrated embodiment, the concentric hole 125 allows flow therethrough to allow a desired air flow. For example, in the illustrated embodiment, with the inner valve disc 130 rotated by 70 degrees, the resulting airflow can be provided to the air turbine starter of the aircraft engine to motor the aircraft engine at sub-idle speed to cool the aircraft engine in response to a bowed rotor condition. Advantageously, the size of the inner valve disc 130 allows a technician to provide a desired flow rate when utilizing the manual override interface 106.

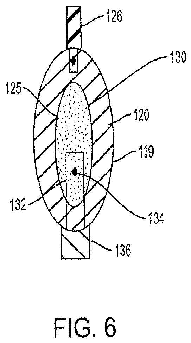

Referring to FIG. 6, the inner valve disc 130 is shown rotated a total of 410 degrees by the manual override interface 106. In the illustrated embodiment, the inner valve disc 130 has rotated within the concentric hole 125 and has engaged the seal land 121 to transmit rotation to the outer valve disc 120 to drive the outer valve disc 120 open. In the illustrated embodiment, the outer valve disc 120 is rotated 70 degrees to open relative to the valve body 104. In the illustrated embodiment, the opening of the outer valve disc 120 allows flow through the valve body 104 to allow a greater air flow. For example, in the illustrated embodiment, with the outer valve disc 120 rotated by 70 degrees, the resulting airflow can provide a full start condition for an aircraft engine initiated by the manual override interface 106.

The terminology used herein is for the purpose of describing particular embodiments only and is not intended to be limiting of the embodiments. While the description of the present embodiments has been presented for purposes of illustration and description, it is not intended to be exhaustive or limited to the embodiments in the form disclosed. Many modifications, variations, alterations, substitutions or equivalent arrangement not hereto described will be apparent to those of ordinary skill in the art without departing from the scope of the embodiments. Additionally, while various embodiments have been described, it is to be understood that aspects may include only some of the described embodiments. Accordingly, the embodiments are not to be seen as limited by the foregoing description, but are only limited by the scope of the appended claims.

## Claims

1. A disc assembly (110) for use in an air valve (100) with a valve body (104), the disc assembly (110) comprising:
an outer disc (120) with a concentric opening (125) therethrough and an outer seal area (119), the outer seal area (119) to selectively seal against the valve body (104); and
an inner disc (130) disposed in the concentric opening (125) of the outer disc (120), the inner disc (130) to selectively seal against the outer disc (120).

2. The disc assembly (110) of claim 1, wherein rotation of the inner disc (130) engages the outer disc (120) to rotate the outer disc (120).

3. The disc assembly (110) of claim 1 or 2, wherein the outer disc (120) includes a seal land (121) to receive the inner disc (130).

4. The disc assembly (110) of claim 1, 2 or 3, further comprising an outer disc shaft (126) coupled to the outer disc (120) to rotate the outer disc (120), wherein:
the outer disc shaft (126) is received in an outer disc shaft hole (122) of the outer disc (120), and
the outer disc shaft (126) is coupled to the outer disc (120) via an outer disc pin (124).

5. The disc assembly (110) of any preceding claim, further comprising an inner disc shaft (136) coupled to the inner disc (130) to rotate the inner disc (130), wherein:
the inner disc shaft (136) is received in an inner disc shaft hole (132) of the inner disc (130), and
the inner disc shaft (136) is coupled to the inner disc (130) via an inner disc pin (134).

6. The disc assembly (110) of claim 5, further comprising a through hole (128) formed through the outer disc (120) to allow the inner disc shaft (130) to pass therethrough.

7. The disc assembly of any preceding claim, wherein the inner disc (130) includes a disc seal (138).

8. An air valve (100), comprising:
a valve body (104); and
the disc assembly (110) of any preceding claim.

9. The air valve (100) of claim 8, further comprising:
a valve actuator (102) coupled to the outer disc (120); and
a manual override interface (106) coupled to the inner disc (130).

10. The air valve (100) of claim 9, further comprising an outer disc shaft (126) coupled to the outer disc (120) and the valve actuator (102) to rotate the outer disc (120).

11. The air valve of claim 9 or 10, further comprising an inner disc shaft (136) coupled to the inner disc (130) and the manual override interface (106) to rotate the inner disc (130).
